# EUROPÄISCHE PATENTANMELDUNG

(11) **EP 1 239 681 A2**
(43) Veröffentlichungstag der Anmeldung: **11.09.2002**
(21) Anmeldenummer: 02100188.8
(22) Anmeldetag: 26.02.2002
(51) Int. Cl.: H04N 9/64

(54) **Einrichtung zur Rauschreduktion in Bildsignalen**

(30) Priorität: 28.02.2001 DE 10109585
(71) Anmelder: Philips Corporate Intellectual Property GmbH, 52066 Aachen (DE); Koninklijke Philips Electronics N.V., 5621 BA Eindhoven (NL)
(72) Erfinder: Wischermann, Gerhard, 52066 - Aachen (DE)
(74) Vertreter: Volmer, Georg, Dipl.-Ing.

(57) **Zusammenfassung**

Bei einer Einrichtung zur Rauschreduktion in Bildsignalen, wobei die Bildsignale ein zeitliches Rekursivfilter durchlaufen, dessen Rückkopplungsfaktor von Bewegung in den von den Bildsignalen dargestellten Bildern abhängt, werden zur Bildung des Rückkopplungsfaktors für das jeweils aktuelle Bild ein erster und ein zweiter Faktor derart kombiniert, dass der kleinere der Faktoren den Rückkopplungsfaktor im wesentlichen bestimmt. Der erste Faktor wird aus dem Rückkopplungsfaktor des vorherigen Bildes gebildet und der zweite Faktor wird aus der Differenz zwischen dem vorherigen Bild und dem aktuellen Bild berechnet.

## Beschreibung

Die Erfindung betrifft eine Einrichtung zur Rauschreduktion in Bildsignalen, wobei die Bildsignale ein zeitliches Rekursivfilter durchlaufen, dessen Rückkopplungsfaktor von Bewegung in den von den Bildsignalen dargestellten Bildern abhängt.

Zur Rauschreduktion in Bildsignalen sind Einrichtungen mit zeitlichen Rekursivfiltern bekannt, beispielsweise durch DE 27 50 173 C2. Je höher dabei der Rückkopplungsfaktor ist, je besser ist die Rauschreduktion, weil dann letztendlich der Bildinhalt vieler Bilder gemittelt wird Bei bewegten Bildinhalten ist jedoch eine Integration von Bild zu Bild nur in Grenzen möglich, da ansonsten eine Unschärfe der bewegten Bildinhalte auftritt. Deshalb wird bei den bekannten Einrichtungen der Rückkopplungsfaktor in Abhängigkeit von einer Bewegung im Bild gesteuert. Die Bewegung wird durch die Bildung des Betrags der Differenzen der Bildsignale zweier aufeinanderfolgender Bilder ermittelt.

Dabei werden die zur Bildung des Bewegungssignals herangezogenen Bildsignale tiefpassgefiltert, um einen Einfluss des Rauschanteils bei der Bildung des Bewegungssignals zu vermeiden. Nachteilig bei diesem Verfahren ist, dass der Rückkopplungsfaktor sprungartig ansteigen kann, wenn das Bewegungssignal sehr klein wird, was zu einer hohen Zeitkonstante des Filters führt.

Dieser Nachteil wird bei einem anderen, durch DE 197 84 721 C2 bekannten Verfahren dadurch vermieden, dass der Rückkopplungsfaktor schrittweise erhöht wird, so dass die Rauschreduktion schneller ansteigt. Dabei wird der Rückkopplungsfaktor für das aktuelle Bild in Abhängigkeit vom Rückkopplungsfaktor des letzten Bildes und einer Bewegt/Unbewegt-Entscheidung gesteuert. Ein Akkumulator zahlt die Zahl C der unbewegten Bilder und sorgt für ein schrittweises Ansteigen von K. Dies führt insbesondere zu einer Verbesserung innerhalb der ersten Bilder am Anfang einer neuen Szene. Dieses zweite bekannte Verfahren hat jedoch den Nachteil, dass der Akkumulator wieder auf Null gesetzt wird, wenn das Bewegungssignal über einen bestimmten einstellbaren Wert steigt. Das damit verbundene plötzliche Zurücksetzen des Rückkopplungsfaktors wirkt sich bei bestimmten Situationen äußerst störend aus.

Aufgabe der vorliegenden Erfindung ist es, eine Einrichtung zur Rauschreduktion anzugeben, bei welcher sich die Rauschreduktion möglichst schnell einem Wert nähert, der an die jeweils vorliegende Bewegung optimal angepasst ist.

Diese Aufgabe wird mit der erfindungsgemäßen Einrichtung dadurch gelöst, dass zur Bildung des Rückkopplungsfaktors für das jeweils aktuelle Bild ein erster und ein zweiter Faktor derart kombiniert werden, dass der kleinere der Faktoren den Rückkopplungsfaktor im wesentlichen bestimmt, dass der erste Faktor aus dem Rückkopplungsfaktor des vorherigen Bildes gebildet wird und dass der zweite Faktor aus der Differenz zwischen dem vorherigen Bild und dem aktuellen Bild berechnet wird. Vorzugsweise wird die Berücksichtigung des jeweils kleineren der Faktoren dadurch erzielt, dass der jeweils kleinere der Faktoren als Rückkopplungsfaktor dient.

Eine erste vorteilhafte Ausgestaltung der erfindungsgemäßen Einrichtung besteht darin, dass der erste Faktor durch Division einer Konstanten durch eine weitere Konstante minus dem Rückkopplungsfaktor des vorherigen Bildes gebildet wird. Dabei ist vorzugsweise vorgesehen, dass der erste Faktor (P) mit der Gleichung P=1/(2-O) berechnet wird, wobei O der Rückkopplungsfaktor des vorherigen Bildes ist.

Eine andere vorteilhafte Ausgestaltung besteht darin, dass der zweite Faktor durch Division eines Grenzwertes (E) durch den Betrag der Differenz zwischen dem vorherigen und dem aktuellen Bild gebildet wird. Vorzugsweise ist dabei vorgesehen, dass der zweite Faktor (L) durch die Gleichung L=E³/X-Y³ gebildet wird, wobei X das aktuelle Bild, Y das vorherige Bild und E der Grenzwert ist.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild des Ausführungsbeispiels,
- Fig. 2: ein Schema mit einer numerischen Darstellung der bei dem Blockschaltbild nach Fig 1 auftretenden Signale und
- Fig. 3: einen Vergleich der Rauschreduktion nach den bekannten Verfahren und mit der erfindungsgemäßen Einrichtung

Die Darstellung als Blockschaltbild besagt nicht, dass die einzelnen Funktionen tatsächlich in einzelnen Schaltungen durchgeführt werden Es ist vielmehr die Anwendung von programmierbaren Prozessoren zur Durchführung der Berechnungen möglich und vorteilhaft.

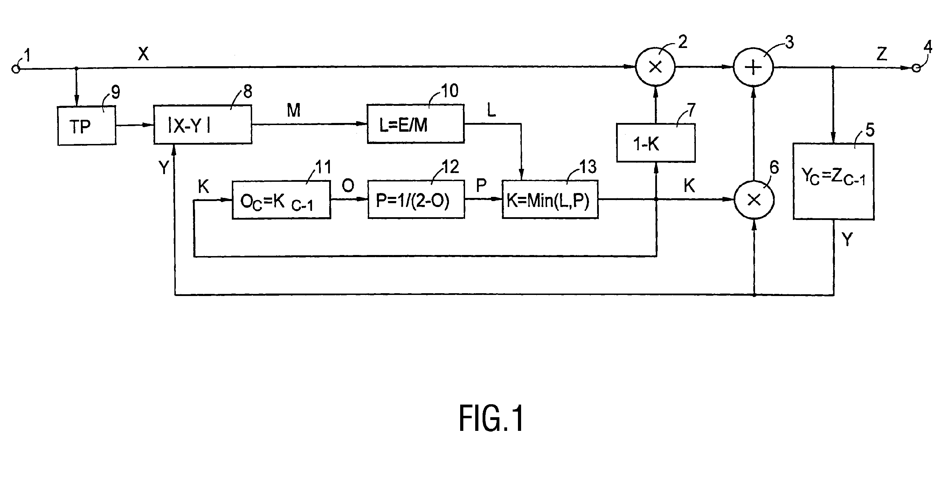

Der Einrichtung nach Fig 1 wird über einen Eingang 1 das Bildsignal X zugeführt. Es gelangt über einen Multiplizierer 2 und einen Addierer 3 als Bildsignal Z zum Ausgang 4. Das Bildsignal Z wird einem Bildspeicher 5 zugeleitet und um eine Bildperiode verzögert aus dem Bildspeicher als Signal Y ausgelesen. Das ausgelesene Bildsignal Y wird über einen zweiten Multiplizierer 6 dem Addierer 3 zugeführt. Dem Multiplizierer 6 wird der Rückkopplungsfaktor K, dem Multiplizierer 2 über eine Schaltung 7 ein Faktor 1-K zugeführt.

Insoweit enthält die Einrichtung nach Fig 1 ein bekanntes Rekursivfilter. Ist K=0, wird X unverändert zum Ausgang 4 weitergeleitet. Es findet bei K=0 keine Rauschreduktion statt. Mit größer werdendem K, wird auch der Anteil des aus dem Bildspeicher 5 ausgelesenen Signals Y am Ausgangssignal Z größer. Bei K=1 wird nur noch das gespeicherte Bildsignal ausgelesen und wieder eingeschrieben. Aus Stabilitätsgründen wird der Maximalwert von K etwas unter 1 gehalten. Es findet dann eine Mittelwertbildung aufeinanderfolgender Bilder im Bildspeicher 5 statt, so dass statistische Störungen (Rauschen) reduziert werden.

Der Rückkopplungsfaktor K wird bei der Einrichtung nach Fig 1 wie folgt abgeleitet: Zunächst wird bei 8 der Betrag der Differenz des jeweils zugeführten (aktuellen) Bildes X und des vorherigen Bildes Y gebildet. Dabei wird das Bild X einer Tiefpassfilterung 9 unterworfen, so dass hochfrequente Anteile (Rauschen) unterdrückt werden, damit diese nicht als Bewegung erkannt werden Bei 10 wird ein Grenzwert E durch das Ausgangssignal M der Schaltung 8 dividiert, wodurch ein erster Faktor L entsteht. L ist umso kleiner, je mehr Bewegung zwischen zwei aufeinanderfolgenden Bildern festgestellt wurde.

Ein zweiter Faktor P wird aus dem Rückkopplungsfaktor K des vorherigen Bildes dadurch gebildet, dass der Rückkopplungsfaktor des vorherigen Bildes zunächst bei 11 um ein Bild verzögert wird. O_{c} ist dabei der jeweils an 12 weitergeleitete Rückkopplungsfaktor, der dem Rückkopplungsfaktor K_{C-1} des vorherigen Bildes entspricht. Der verzögerte Faktor O wird dann bei 12 der Operation P=1 /(2-O) unterworfen, worauf der zweite Faktor P entsteht. Bei 13 wird von den beiden Faktoren L und P der jeweils kleinere ausgewählt und als Rückkopplungsfaktor K zur Steuerung des Rekursivfilters herangezogen.

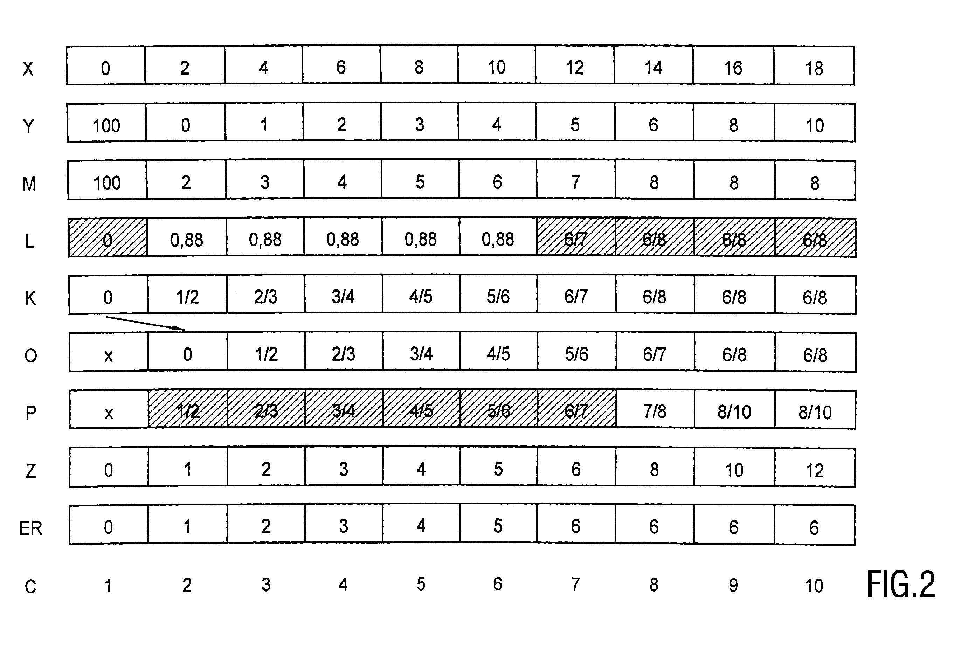

Fig 2 zeigt für jeweils zehn Bilder, die mit einem Zähler C=1...10 gekennzeichnet sind, verschiedene Signale. Es sei angenommen, dass das Eingangssignal mit dem Beginn einer neuen Szene von Bild zu Bild monoton ansteigt mit den Werten 0, 2, 4 usw. Im ersten dargestellten Bild hat das Signal Y einen stark unterschiedlichen Wert, beispielsweise 100 aus einer vorangegangenen Szene, so dass das Bewegungssignal M zunächst ebenfalls den Wert 100 aufweist und dann über 2, 3, 4 bis 8 wieder allmählich ansteigt. Als Grenzwert E wird bei der Darstellung nach Fig 2 der Wert 6 angenommen. Außerdem wird L auf 0,88 begrenzt. Bei den für C=1...10 angegebenen Werten für M steigt L von 0 zunächst auf 0,88, fällt dann im siebenten Bild auf 6/7 und dann weiter auf 6/8.

Wie anhand der weiter unten dargestellten Zeilen noch ausgeführt wird, ist beim sechsten Bild L größer als P. Der Rückkopplungsfaktor K folgt dann zunächst dem zweiten Faktor P und entspricht erst bei dem siebenten Bild dem Faktor L. Aus K wird durch die Verzögerung um ein Bild bei 11 (Fig 1) O gebildet. Die Verzögerung ist in Fig 2 durch einen Pfeil symbolisiert. Aus O wird dann P abgeleitet. Dieser Faktor ist bis zum sechsten Bild kleiner als L, nimmt dann bei dem siebenten Bild den gleichen Wert wie L an und wird dann größer, so dass danach der Wert L für den Rückkopplungsfaktor K maßgebend ist. Diejenigen Werte von L und P, aus denen K gebildet wird, sind in Fig 2 schraffiert. Die Werte von O und P für das erste Bild sind in Fig 2 mit einem x gekennzeichnet, da diese von der Vorgeschichte abhängen, die aus der Sicht von Fig 2 unbekannt ist.

In einer weiteren Zeile der Fig. 2 ist dann noch das Signal Z=(1-K)X+KY dargestellt, das wegen der rekursiven Filterung langsamer ansteigt als das Eingangssignal X, so dass ein Fehler ER entsteht.

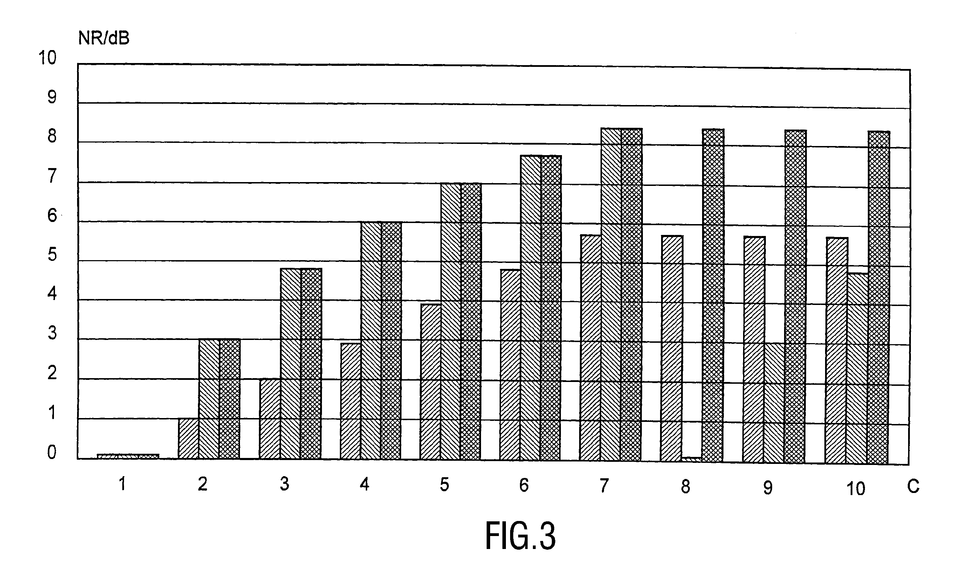

Fig 3 zeigt für die im Zusammenhang mit Fig 2 erläuterte monoton ansteigende Bildfolge den theoretischen Verlauf der Rauschreduktion mit den eingangs erwähnten bekannten Verfahren (jeweils einfach schraffiert) und mit der Erfindung (kreuzweise schraffiert) im Vergleich Die entscheidende Verbesserung gegenüber dem zweiten bekannten Verfahren ist, dass bei Erreichen der Bewegtschwelle (achtes Bild) der Rückkopplungsfaktor K nicht auf 0 zurückspringt. Dadurch bleibt die Rauschreduktion auf hohem Niveau und es treten keine sprunghaften Artefakten im Ausgangsbild auf. Im Vergleich zum ersten bekannten Verfahren wird mit der Erfindung ein schnellerer Aufbau der Rauschreduktion zu Beginn einer Phase von unbewegten Bildern erreicht.

## Patentansprüche

1. Einrichtung zur Rauschreduktion in Bildsignalen, wobei die Bildsignale ein zeitliches Rekursivfilter durchlaufen, dessen Rückkopplungsfaktor von Bewegung in den von den Bildsignalen dargestellten Bildern abhängt,
**dadurch gekennzeichnet,**
**dass** zur Bildung des Rückkopplungsfaktors (K) für das jeweils aktuelle Bild ein erster (P) und ein zweiter (L) Faktor derart kombiniert werden, dass der kleinere der Faktoren (L, P) den Rückkopplungsfaktor (K) im wesentlichen bestimmt, dass der erste Faktor (P) aus dem Rückkopplungsfaktor (O) des vorherigen Bildes gebildet wird und dass der zweite Faktor (L) aus der Differenz zwischen dem vorherigen Bild (Y) und dem aktuellen Bild (X) berechnet wird

2. Einrichtung each Anspruch 1,
**dadurch gekennzeichnet,**
**dass** der jeweils kleinere der Faktoren (L, P) als Rückkopplungsfaktor (K) dient.

3. Einrichtung nach einem der Ansprüche 1 oder 2,
**dadurch gekennzeichnet,**
**dass** der erste Faktor (P) durch Division einer Konstanten durch eine weitere Konstante minus dem Rückkopplungsfaktor (O) des vorherigen Bildes gebildet wird

4. Einrichtung nach Anspruch 3,
**dadurch gekennzeichnet,**
**dass** der erste Faktor (P) mit der Gleichung P=1 /(2-O) berechnet wird, wobei O der Rückkopplungsfaktor des vorherigen Bildes ist.

5. Einrichtung each einem der vorhergähenden Ansprüche,
**dadurch gekennzeichnet**
**dass** der zweite Faktor (L) durch Division eines Grenzwertes (E) durch den Betrag der Differenz zwischen dem vorherigen (Y) und dem aktuellen (X) Bild gebildet wird.

6. Einrichtung nach Anspruch 5,
**dadurch gekennzeichnet,**
**dass** der zweite Faktor (L) durch die Gleichung L=E/[X-Y] gebildet wird, wobei X das aktuelle Bild, Y das vorherige Bild und E der Grenzwert ist.
